# EUROPEAN PATENT SPECIFICATION

(11) **EP 4 151 914 B1**
(45) Date of publication and mention of the grant of the patent: **06.08.2025**
(21) Application number: 21905401.2
(22) Date of filing: 16.11.2021
(51) Int. Cl.: F24F 6/14, F04D 25/08, F04D 29/00, B62B 1/04, B62B 1/12, F04D 19/00, F04D 25/06, F04D 27/00, F04D 29/60

(54) **MISTING FAN**
NEBELLÜFTER
VENTILATEUR DE BRUMISATION

(30) Priority: 16.12.2020 CN 202011479659; 27.09.2021 CN 202111133193; 27.09.2021 CN 202111133224; 27.09.2021 CN 202111133626; 27.09.2021 CN 202122357468 U
(43) Date of publication of application: 22.03.2023
(73) Proprietor: Nanjing Chervon Industry Co., Ltd., Nanjing, Jiangsu 211106 (CN)
(72) Inventor: ZHONG, Keqiong, Nanjing, Jiangsu 211106 (CN); ZHANG, Su, Nanjing, Jiangsu 211106 (CN); LIU, Yangzi, Nanjing, Jiangsu 211106 (CN)
(74) Representative: Sun, Yiming
(86) International application number: PCT/CN2021/130901
(87) International publication number: WO 2022/127472

(56) References cited:
- CN-A- 111 911 437
- CN-A- 111 911 437
- CN-U- 203 856 744
- CN-U- 209 107 116
- JP-A- 2007 231 843
- KR-B1- 102 034 286
- US-A1- 2003 111 746
- US-A1- 2005 006 497
- US-A1- 2009 314 216
- US-B1- 7 150 162
- US-B1- 8 966 925
- US-B2- 8 979 073

## Description

This application claims priority to Chinese Patent Application No. 202011479659.1 filed with the China National Intellectual Property Administration (CNIPA) on Dec. 16, 2020, Chinese Patent Application No. 202111133193.4 filed with the CNIPAon Sep. 27, 2021, Chinese Patent Application No. 202111133224.6 filed with the CNIPAon Sep. 27, 2021, Chinese Patent Application No. 202111133626.6 filed with the CNIPAon Sep. 27, 2021, and Chinese Patent Application No. 202122357468.4 filed with the CNIPA on Sep. 27, 2021,

### TECHNICAL FIELD

This application relates to a misting fan.

### BACKGROUND

A misting fan is usually connected to a commercial power as an energy source, and the misting fan has great limitations and cannot be adapted to some places far from the commercial power or lack of sockets, which seriously limits the use of the misting fan. For a misting fan connected to a small battery pack, it cannot be applied to the spray requirements of large venues, large areas, and high flow rates, which further limits the range of application of the misting fan. A misting fan according to the preamble of claim 1 is found in CN1 11911437. How to provide a misting fan with compact structure, high power output, long battery life and convenient operation is a technical problem to be urgently solved by those skilled in the art.

### SUMMARY

This application provides a misting fan with a good misting effect and a convenient operation.

This application adopts the following technical solutions:
According to the invention, there is provided a misting fan, comprising: a host comprising a fan assembly and a nozzle, wherein the fan assembly comprises a fan blade and a motor configured to drive the fan blade, and the nozzle is located on the fan assembly and configured to spray water mist; and a rack configured to support the fan assembly; wherein the rack comprises an extending portion configured to be placed and extending in a plane; and the misting fan is provided with a moving wheel for walking, wherein the moving wheel is provided in the extending portion and a battery compartment configured to accommodate a power supply assembly to power the motor, wherein the battery compartment is arranged at an end of the rack away from the moving wheel; wherein an extending direction of the battery compartment and the extending portion obliquely intersect and form a included angle (a), wherein the included angle is greater than or equal to 10° and less than or equal to 75°.

In an example, the misting fan further includes a handle assembly cooperated with the moving wheel, and the handle assembly is provided on an end away from the moving wheel.

In an example, the handle assembly is set as a telescopic structure, and has a first state and a second state relative to the rack; when the handle assembly is in the first state relative to the rack, the handle assembly is in a contracted state; when the handle assembly is in the second state relative to the rack, the handle assembly is in an extended state.

In an example, when the handle assembly is in the second state, the misting fan walks at a relative angle to a walking road and the moving wheel serves as a pivot at this time.

In an example, the rack includes a first connecting assembly, a second connecting assembly and a third connecting assembly, the second connecting assembly is connected to the first connecting assembly and the third connecting assembly respectively, the first connecting assembly is connected to the second connecting assembly to form a first buffer portion; the first buffer portion obliquely intersects with the second connecting assembly and the second connecting assembly; the third connecting assembly is connected to the second connecting assembly to form a second buffer portion, the second buffer portion obliquely intersects with the third connecting assembly and the second connecting assembly.

In an example, the misting fan further includes a power supply assembly and a battery compartment configured to accommodate the power supply assembly; the third connecting assembly is provided on a side of the rack away from the moving wheel, the third connecting assembly is formed by a set of substantially parallel connecting rods, the battery compartment is at least partially disposed between the parallel-arranged connecting rods of the third connecting assembly.

In an example, a handle assembly is telescopic relative to the second connecting assembly, the handle assembly includes a grip portion, and the grip portion is provided on an outer side of the third connecting assembly, the grip portion and third connecting assembly are distributed at least partially around the battery compartment.

In an example, the rack partially surrounds the peripheral side of the fan assembly, and is connected to the fan assembly by at least a first pivot.

This application further adopts the following technical solutions:
A misting fan includes: a fan assembly including a fan blade and a motor configured to drive the fan blade; a nozzle located on the fan assembly and configured to spray water mist; and a rack configured to support the fan assembly. The misting fan further includes a moving wheel that provides the misting fan with a walking ability and is in contact with a placement plane. The misting fan at least includes a first standing posture and a second standing posture, and different positions of the rack are in contact with the placement plane and provide support when the misting fan is in different standing postures.

A misting fan includes: a fan assembly including a fan blade and a motor configured to drive the fan blade; a plurality of nozzles, wherein the plurality of nozzles are located on the fan assembly and configured to spray water mist; and a rack configured to support the fan assembly. The fan assembly further includes a control module configured to control the plurality of nozzles to reduce a total amount of a water output from the plurality of nozzles over a period of time, while ensuring that a pressure of a water output of the plurality of nozzles remains unchanged.

In an example, under an action of the control module, the plurality of nozzles have a time interval t between an n^{th} spraying of water mist and an n+1^{th} spraying of water mist, where n≥1.

In an example, under an action of the control module, some of the plurality of nozzles spray water mist, and the remaining ones of the plurality of nozzles stop spraying water mist.

In an example, each of the plurality of nozzles includes a switching structure configured to switch a diameter of a water outlet of the plurality of nozzles.

In an example, the fan assembly is connected to the rack by at least a pivot along which the fan assembly is movable relative to the rack.

In an example, the misting fan further includes a housing assembly. The housing assembly forms an accommodating space. The fan assembly is at least partially disposed in the accommodating space. The housing assembly includes a main body portion and a cover body, the nozzles are provided on the cover body, and the cover body is rotatable relative to the main body portion.

A misting fan includes: a fan assembly including a fan blade and a motor configured to drive the fan blade; a nozzle located on the fan assembly and configured to spray water mist; and a rack configured to support the fan assembly. The misting fan further includes a control module configured to control the nozzle to reduce a total amount of a water output from the nozzle over a period of time, while ensuring that a pressure of the water output of the nozzle remains unchanged; and under an action of the control module, the nozzle has a time interval t between an n^{th} spraying of water mist and an n+1^{th} spraying of water mist, where n≥1.

A control method of a misting fan is provided. The misting fan includes: a fan assembly including a fan blade and a motor configured to drive the fan blade to rotate; a plurality of nozzles, wherein the plurality of nozzles are located on the fan assembly and configured to spray water mist; a rack configured to support the fan assembly. Within a time T, when an outlet pressure of a single one of the plurality of nozzles is P, a total amount of a water output from the plurality of nozzles is Q. Under an action of a control module, within the time T, when the outlet pressure of the single one of the plurality of nozzles is P, the total amount of the water output from the plurality of nozzles is Q', and Q '<Q.

In an example, under the action of the control module, the plurality of nozzles have a time interval t between an n^{th} spraying of water mist and an n+1^{th} spraying of water mist, where n≥1; or, under the action of the control module, some of the plurality of nozzles spray water mist, and the remaining ones of the plurality of nozzles stop spraying water mist; or, under the action of the control module, a diameter of the plurality of nozzles decreases.

In an example, the misting fan includes a pump. When the pump is working, when it is detected that a working current of the pump is greater than a maximum rated working current, the control module determines that the pump is blocked, and the control module controls the pump to stop working. When the pump is working, when it is detected that the working current of the pump is less than the minimum rated working current for a continuous time t₀, the control module determines that the pump is dry-heated, and the control module controls the pump to stop working.

A misting fan includes: a fan assembly including a fan blade and a motor configured to drive the fan blade; a nozzle located on the fan assembly and configured to spray water mist; a rack configured to support the fan assembly; a power supply assembly mounted to the rack and configured to power the misting fan; and a water inlet pipe with one end connected to the nozzle through a pipeline, and one end extending outward from the misting fan and connected to a water source.

In an example, the misting fan includes a water distribution pipe detachably connected to the water inlet pipe.

In an example, the water distribution pipe includes at least a first water distribution pipe and a second water distribution pipe, the first water distribution pipe is configured to connect to a first external water source, and the second water distribution pipe is configured to connect to a second external water source.

In an example, the first external water source is a static water source, and the second external water source is a flowing water source.

In an example, a quick release mechanism is provided at a connection between the water inlet pipe and the water distribution pipe.

In an example, the misting fan includes a pump, the pump connects the nozzle and the water inlet pipe through a pipeline, and the rack is further provided with a housing configured to accommodate the pump.

In an example, the water inlet pipe is provided with a pressure-stabilizing valve.

In an example, the rack includes a first connecting assembly, a second connecting assembly and a third connecting assembly, the second connecting assembly is connected to the first connecting assembly and the third connecting assembly respectively, the first connecting assembly is connected to the second connecting assembly to form a first buffer portion; the first buffer portion obliquely intersects with the second connecting assembly and the second connecting assembly; the third connecting assembly is connected to the second connecting assembly to form a second buffer portion, the second buffer portion obliquely intersects with the third connecting assembly and the second connecting assembly.

In an example, the misting fan further includes a power supply assembly and a battery compartment configured to accommodate the power supply assembly; the third connecting assembly is provided on a side of the rack away from the moving wheel, the third connecting assembly is formed by a set of substantially parallel connecting rods, the battery compartment is at least partially disposed between the parallel-arranged connecting rods of the third connecting assembly.

In an example, a diameter of a complete machine of the misting fan is greater than or equal to 550 mm and less than or equal to 1000 mm.

The application provides a misting fan with high output power, strong stability and easy operation; provides a misting fan with high output power, water saving and good atomization effect; the misting fan is more convenient to use and can be connected to different external water sources more easily.

### BRIEF DESCRIPTION OF DRAWINGS

FIG. 1 is a front view of a misting fan;
FIG. 2 is a perspective view of the misting fan in FIG. 1;
FIG. 3 is a perspective view of the misting fan in FIG. 1 from another point of view;
FIG. 4 is an exploded view of the misting fan in FIG. 1;
FIG. 5 is an exploded view of the misting fan in FIG. 1 from another point of view;
FIG. 6 is a perspective view of the misting fan in FIG. 1 after removing a handle assembly and opening a battery compartment cover;

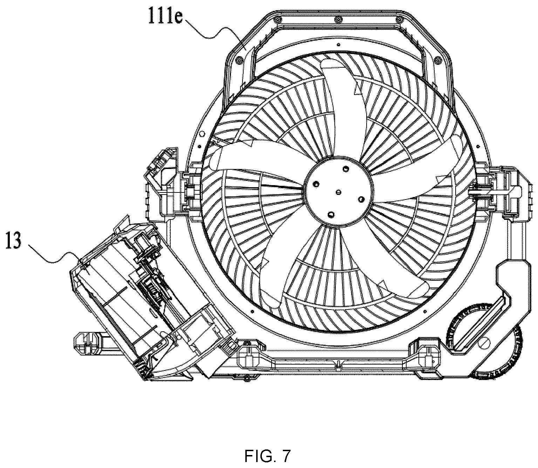

FIG. 7 is a sectional view of the misting fan in FIG. 1;
FIG. 8 is a right view of the misting fan in FIG. 1;
FIG. 9 is a perspective view of the misting fan in FIG. 1 when the handle assembly is in an extended position;
FIG. 10 is an enlarged view of the structure of part A in FIG. 8;
FIG. 11 is a perspective view of a misting fan in a second example of the present application;
FIG. 12 is a schematic diagram of a direction of a water inlet pipe of the misting fan in the second example of the present application;
FIG. 13 is a schematic diagram of a misting fan in a hanging state in a third example of the present application;
FIG. 14 is a schematic diagram of a hook in a first way of setting in the third example of the present application;
FIG. 15 is a schematic diagram of the hook in a second way of setting in the third example of the present application; and
FIG. 16 is a schematic diagram of a misting fan in a fourth example of the present application.

### DETAILED DESCRIPTION

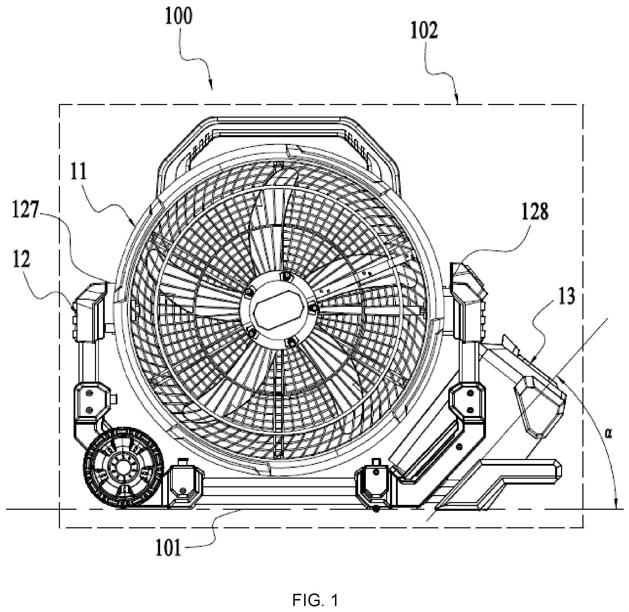

FIGS. 1 to 2 show a misting fan 100, which blows wind with water mist through functions of blowing and spraying, and can cool and humidify a preset site. The misting fan 100 provided in this example has a large shape and a high power, and can perform large-scale and continuous cooling and humidification of large venues, such as indoor and outdoor large stadiums, football fields, scenic spots, and the like. When the misting fan 100 works in a place far from a water source, the misting fan 100 can be connected to an external water source such as a bucket. When the misting fan 100 works indoors or in a place close to the water source, it can also be directly connected to a tap water pipe. Specifically, the misting fan 100 includes a host 11, a rack 12 and a power supply assembly 13. The host 11 and the power supply assembly 13 are both connected to the rack 12, the host 11 is also electrically connected with the power supply assembly 13, and the power supply assembly 13 is detachably connected to the rack 12.

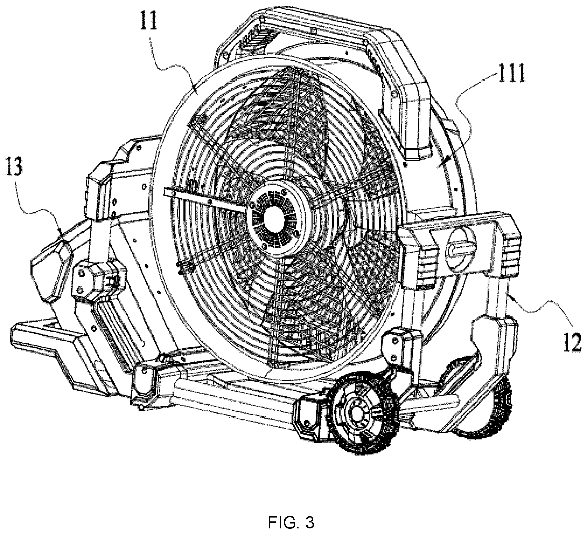

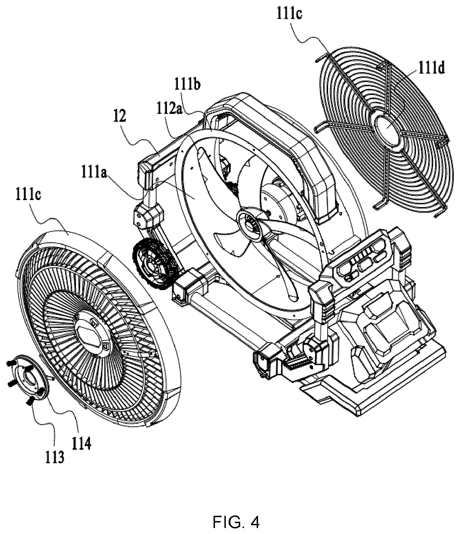

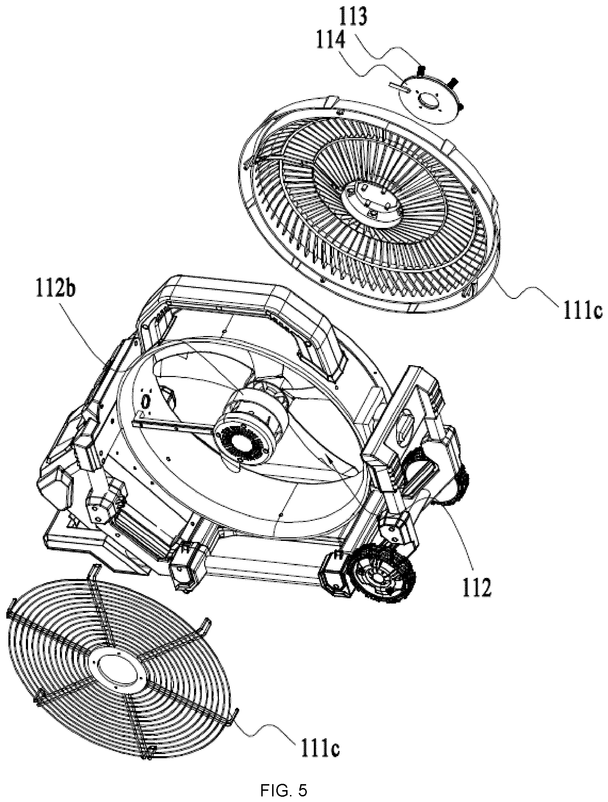

As shown in FIGS. 3 to 5, the host 11 includes a housing assembly 111, a fan assembly 112 and a nozzle 113. The housing assembly 111 forms an accommodating space 111a, and the fan assembly 112 is at least partially disposed in the accommodating space 111a. The housing assembly 111 includes a main body portion 111b and a cover body 111c. The main body portion 111b is formed around the accommodating space 111a, and the cover body 111c is arranged around the main body portion 111b and connected to the main body portion 111b. The cover body 111c also at least partially closes the main body portion 111b and forms a through hole through which airflow flows in or out. Specifically, the cover body 111c has a mesh structure and is arranged on two sides of the main body portion 111b. The cover body 111c is further formed with a cavity 111d for installing or supporting the fan assembly 112, and the fan assembly 112 is installed to the host 11 through the cavity 111d. The cover body 111c is configured to be a structure rotatable with respect to the main body portion 111b. Specifically, the rotation is set to be smaller than the rotation speed of fan blades 112a, and the rotation of the cover body 111c drives the nozzle 113 to rotate, which is easier to combine with the rotating airflow, and plays a role of uniformly atomizing water mist. The water mist has a wider diffusion range, and further achieves a result of improving a cooling effect.

The fan assembly 112 includes the fan blades 112a and a motor 112b, and the motor 112b is used to drive the fan blades 112a to rotate around an axis of the motor 112b. The motor 112b is sealed by a waterproof material to prevent water mist from entering the motor under an action of the environment. Specifically, for example, the waterproof material can be a plastic film and so forth, and the motor is sealed by a plastic film through a process such as hot air and so on.

The nozzle 113 is used to spray water mist, and the nozzle 113 is mounted to the housing assembly 111 or the fan assembly 112. When the power supply assembly 13 is installed to the host 11, the misting fan 100 is activated. The water mist is sprayed from the nozzle 113 to the external environment, and the fan blade 112a rotates to generate an air flow to blow the water mist sprayed from the nozzle 113 into the air, thereby making the temperature of the air in the environment drops. In this example, the nozzle 113 is chosen to be a detachable and washable spray head, which is detachably connected to the housing assembly 111 or the fan assembly 112. Further, when the spray head is detachable, the nozzle 113 is provided with a filter screen. The filter screen is used to filter the water supply, which can reduce the frequency of disassembly and cleaning of the spray head, and the filter screen is detachably connected to the spray head. It is to be understood that the nozzle 113 is also connected with a water pipe assembly 114. The water pipe assembly 114 includes a water pump and a water-leading pipe. The water-leading pipe connects the water pump and the nozzle 113. Under the action of the water pump, the water is sucked into the water-leading pipe and can be transported to the nozzle 113 in a high pressure state, so as to be sprayed in an atomized state. In order to avoid interference between the water leading pipe and other components, the housing assembly 111 is further provided with a receiving portion for accommodating the water leading pipe. As an implementation manner, the accommodating portion may be provided as a buckle for clamping the water leading pipe, or the housing assembly 111 itself forms an accommodating groove for accommodating or fixing the water leading pipe, so that the water-leading pipe can be closely attached to the housing assembly 111 to avoid interference with other components.

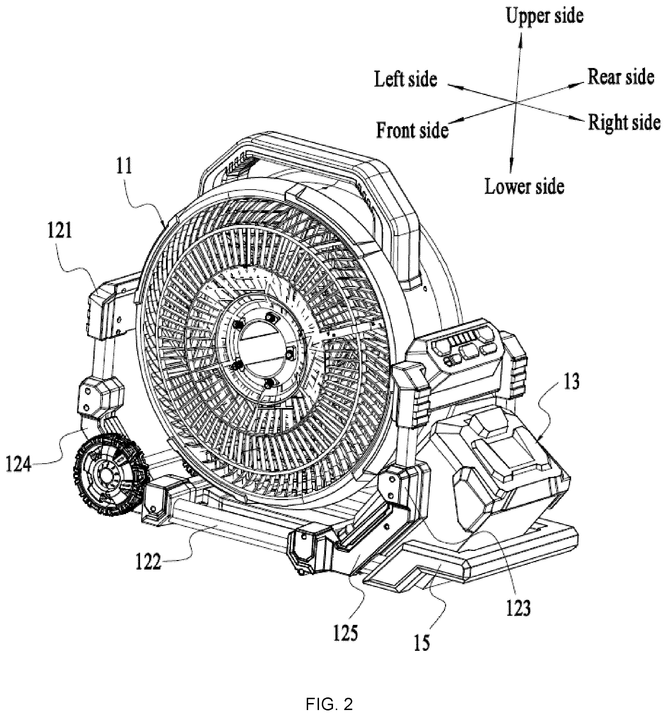

In order to illustrate the technical solution of the present application, a front side, a rear side, a left side, a right side, an upper side and a lower side as shown in FIG. 2 are further defined. As shown in FIGS. 1 to 5, in a first plane 102 perpendicular to the rotation axis of the motor 112b, the projection of the rack 12 in the first plane 102 along the direction of rotation axis is substantially rectangular. Therein, the rack 12 includes an extending portion that when placed extends in a plane parallel to a placement plane 101 of the external environment. Moving wheels are arranged within the extending portion, in particular at an end of the extending portion. The rack 12 partially surrounds a peripheral side of the fan assembly 112, and is connected to the fan assembly through at least a first pivot 127, and further, the rack 12 further includes a second pivot 128. The fan assembly 112 can rotate as a whole around the above-mentioned pivots, thereby driving the water mist sprayed from the nozzle to cover a larger area.

The rack 12 includes a first connecting assembly 121, a second connecting assembly 122 and a third connecting assembly 123. The second connecting assembly 122 forms a fixed connection with the first connecting assembly 121 and the third connecting assembly 123 respectively. In fact, the first connecting assembly 121, the second connecting assembly 122 and the third connecting assembly 123 can also be configured to be integrally formed, as long as the three of them meet the structural strength requirements. The rack 12 is formed with an accommodating groove for accommodating the host 11, and the host 11 is at least partially disposed in the accommodating groove and is fixedly or detachably connected with the rack 12. In this example, a first buffer portion 124 is provided at the connection between the second connecting assembly 122 and the first connecting assembly 121, and the first buffer portion 124 obliquely intersects with the first connecting assembly 121 and the second connecting assembly 122 at the same time. A second buffer portion 125 is provided at the connection between the second connecting assembly 122 and the third connecting assembly 123, and the second buffer portion 125 obliquely intersects with the second connecting assembly 122 and the third connecting assembly 123 at the same time. While saving the size of the whole machine, it is more convenient to switch the misting fan among different standing postures. In this example, the first connecting assembly 121, the second connecting assembly 122 and the third connecting assembly 123 also extend in respective planes, thereby forming a plane on which the misting fan 100 can be placed. That is, the first connecting assembly 121, the second connecting assembly 122, and the third connecting assembly 123 can all be used as the extending portion and can be used for placement of the misting fan 100.

Specifically, the first buffer portion 124 and the second buffer portion 125 are shell-shaped with multiple contact surfaces, and the first connecting assembly 121, the second connecting assembly 122, and the third connecting assembly 123 include a plurality of connecting rods that are spaced apart. The connecting rods are connected to the aforementioned buffer portions. The misting fan 100 includes at least a first standing posture and a second standing posture. When the misting fan is in different standing postures, different positions of the rack are in contact with the placement plane 101 and provide support. The standing postures mean that the fan can be stably supported on the placement plane 101 without relying on external force, and the above-mentioned standing postures do not exclude the situation that the misting fan moves along the placement plane 101 in these postures. In this example, part of end surfaces of the first and second buffer portions can be used as placement surfaces of the misting fan 100. At this time, a plane where the end surfaces are located is tangent to a lower edge of the moving wheel 14, and the second connecting assembly 122 is located above the plane or being flush with the plane. This enables the fan to stand stably in the first standing posture shown in FIG. 2. This example has the second standing posture. For example, the first connecting assembly 121 is used as a base. At this time, an other end of the first connecting assembly 121 is provided with a shell-shaped end. The shell-shaped end, a lower edge of the moving wheel 14 and an end of the first buffer portion 124 is used as a support for standing. That is, forming the above-mentioned extending portion. The first connecting assembly 122 is located above or flush with the plane, which can ensure the stable standing of the misting fan.

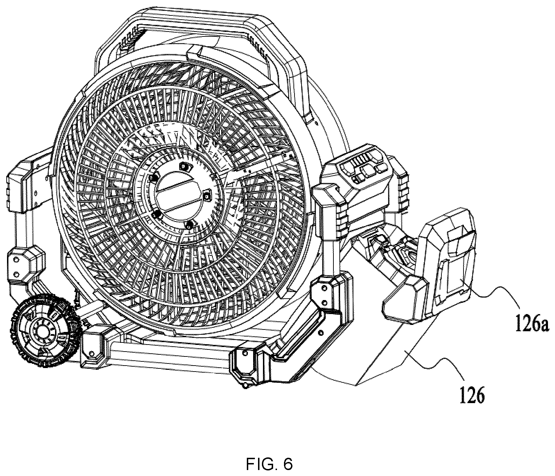

As shown in FIGS. 1, 2 and 6, the second buffer portion 125 is further provided with a battery compartment 126 for connecting the power supply assembly 13. As an example, the power supply assembly 13 is provided as one or more battery packs that can be directly mounted to the battery compartment 126. The first connecting assembly 121, the second connecting assembly 122 and the third connecting assembly 123 all include a set of substantially parallel connecting rods. The battery compartment 126 is substantially disposed in a joint space of the substantially parallel connecting rods of the third connecting assembly 123 and fully utilizes the space between the third connection component 123 and the host 11. Wherein, the battery compartment 126 actually further fully utilizes the joint space of the connecting rods of the third connecting assembly 123. The battery compartment 126 is substantially in the structure of a rectangular parallelepiped, the interior of which is hollow, and can fit with the power supply assembly 13. Inside the battery compartment 126, it is further provided with a joint portion or a connection terminal (not shown in the figure) for connecting the battery pack, so that when the battery pack is inserted into the battery compartment 126, the electrical connection with a control circuit can be realized. In this solution, the battery compartment 126 is further provided with a compartment cover 126a, which can rotate around a rotation axis and has a first position for closing a space in the battery compartment 126 and a second position for opening the space in the battery compartment 126. It can be understood that the compartment cover 126a is disposed on an end of the battery compartment 126 away from the third connecting assembly 123, so as to avoid generating interference with the third connecting assembly 123 when the compartment cover 126a is converted between the first position and the second position. The battery compartment 126 further extends along the extending direction of the second buffer portion 125 , so as to better fit with the connecting rods of the third connecting assembly 123, so as to make the connection relation between the battery compartment 126 and the third connecting assembly 123 is closer. In fact, the battery compartment 126 is disposed near the second connecting assembly 122, so that after the battery compartment 126 is installed with the battery pack, a center of gravity of the entire misting fan 100 is closer to a lower side. This makes the misting fan 100 more stable when it is placed and not easy to fall under the impact of an external environment. The second connecting assembly 122 substantially extends in a plane perpendicular to an up-down direction, and an outer contour of the battery compartment 126 is provided above the plane. That is, when the misting fan 100 is placed normally, the outer contour of the battery compartment 126 does not generate interference with the second connecting assembly 122, and a lower surface of the second connecting assembly 122 is used as the contact surface. In this example, it is further provided that an acute angle α of an included angle of the placement plane 101 between the extending direction of the battery compartment 126 is greater than or equal to 10° and less than or equal to 75°, so as to match with the second buffer portion 125.

In this example, since a rated power of the misting fan 100 is large, in order to satisfy the function output of the misting fan 100 for a long time, the power supply assembly 13 is provided to have a large capacity, so that it has a large weight. In addition, the host 11 occupies a large space in the up-down direction and in a left-right direction due to a need to satisfy the blowing or spraying of a large area. Specifically, a size of the host 11 in the up-down direction is greater than or equal to 400 mm and less than or equal to 550 mm; a size of the host 11 in the left-right direction is greater than or equal to 400 mm and less than or equal to 500 mm. When the host 11 is installed on the rack 12, a diameter of the entire misting fan 100 is greater than or equal to 550 mm and less than or equal to 1000 mm. Specifically, a size of the entire misting fan 100 in the up-down direction is set to be greater than or equal to 600 mm and less than or equal to 750 mm, and a size of the entire misting fan 100 in the left-right direction is set to be greater than or equal to 650 mm and less than or equal to 800 mm. In this example, the host 11 of the misting fan 100 is further provided with a handle portion 111e configured to be lifted and carried, and the handle portion 111e further occupies a preset height in the up-down direction, so that a size of the entire machine of the misting fan 100 in the up-down direction is greater than or equal to 620mm and less than or equal to 720mm. Through the above arrangement, an air volume that can be blown out by the misting fan 100 provided in this example can reach 5000 cfm, thereby achieving a better cooling effect.

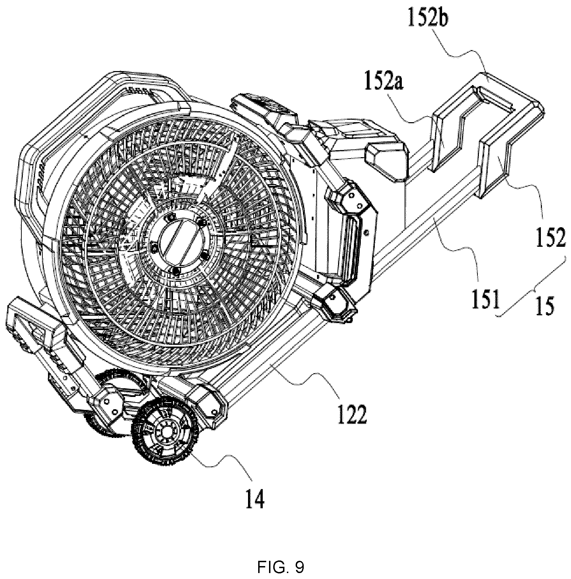

As shown in FIG. 9, as an example, the misting fan 100 is further provided with the moving wheel 14 configured to move. Specifically, the moving wheel 14 is provided on the first buffer portion 124 and can rotate around a rotation axis. Specifically, the rotating shaft is provided on the first connecting component 121 or the second connecting component 122. As an example, two moving wheels 14 are provided, which are respectively located on the connecting rods of the first connecting assembly 121 or the second connecting assembly 122. It can be understood that one or more moving wheels 14 can also be provided, so that they can be optionally provided on the connecting rods and are configured to move the misting fan 100. The moving wheel 14 has a circumferential outer contour, and when it is mounted to the first connecting assembly 121 or the second connecting assembly 122, its outer contour is substantially flush with the placement plane 101 or is located on an upper side of the placement plane 101. Thus, when the misting fan 100 is normally placed, the outer contour of the moving wheel 14 does not interfere with the second connecting assembly 122, and a lower surface of the second connecting assembly 122 is used as a contact surface, or the outer contour of the moving wheel 14 and the lower surface of the second connecting assembly 122 are used as the contact surface at the same time. In order to facilitate the movement of the misting fan 100, a handle assembly 15 which is matched with the moving wheel 14 is further provided. Specifically, the handle assembly 15 includes a main body portion 151 extending substantially in a linear direction and a grip portion 152 connected to the main body portion 151. The grip portion 152 includes an inner contour and an outer contour. The inner contour is arranged around the battery compartment 126, and the outer contour is configured to be flush with the placement plane 101 in the up-down direction or to be on the upper side of the placement plane 101. The grip portion 152 includes a first grip portion 152a extending in the same direction as the battery compartment 126 and a second grip portion 152b substantially parallel to the placement plane 101. The first grip portion 152a includes two oppositely disposed units, and the second gripping portion 152b is configured as a semi-enclosed annular member connecting the two first gripping portions 152a. Since the misting fan 100 of this example has various standing postures, the above structure combined with the positions of the third connecting component 123 and the battery compartment 126 can fully protect the safety of the battery compartment 126 in different standing postures. Even when the fan is in a walking state, it can also improve the stability of the battery pack and reduce the vibration of the battery pack. Based on the size of the misting fan 100 in this example, the arrangement of the battery compartment 126 can make the whole machine have a more stable center of gravity.

The handle assembly 15 is further provided as a telescopic structure, and is arranged on an end of the second connecting assembly 122 away from the moving wheel 14. In this example, the connecting rods of the second connecting assembly 122 are provided as hollow structure, which can be configured to accommodate at least part of the handle assembly 15.

The handle assembly 15 has a first state and a second state. When the handle assembly 15 is in the first state, the handle assembly 15 is in a retracted state, and at this time, the inner contour of the grip portion 152 is substantially fitted with or close to the battery compartment 126. The main body portion 151, the first grip portion 152a and the second grip portion 152b surround each side surface of the battery compartment 126, respectively. When the handle assembly 15 is in the second state, the handle assembly 15 is in an extended state. At this time, the main body portion 151 of the handle assembly 15 protrudes from the second connecting assembly 122 to a preset length, so as to facilitate holding. At this time, it is possible to make the misting fan 100 is dragged at a certain angle with the ground, and can roll forward along the ground under the action of rollers. In order to facilitate the operation, when the misting fan 100 is dragged at the certain angle with the ground, its center of gravity is set to be located between the grip portion 152 and the moving wheel 14. More specifically, when the misting fan 100 is dragged at the certain angle with the ground, its center of gravity is set close to the moving wheel 14.

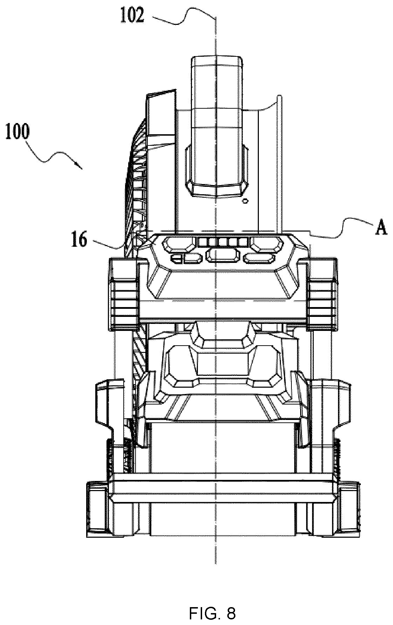

As shown in FIG. 2 and FIG. 8, the misting fan 100 is further provided with a control module 16 configured to control an output mode and an output power. The control module 16 is provided on the third connection assembly 123, located between the two connecting rods of the third connection assembly 123, and is located at an upper end of the battery compartment 126. Specifically, a panel of the control module 16 includes a power button 161, an air volume display screen 162, an air volume control button 163, a water mist control button 164, a top-gear button 165 and a first indicator light 166. The power control button is used to control the misting fan 100 to be turned on or off, and can control the misting fan 100 to enter a remote control mode in a power-on state. In addition, the air volume display screen 162 includes a plurality of gear displays, and can reflect a current output air volume in real time. The air volume control button 163 includes a first control button 163a and a second control button 163b. The first control button 163a is used to decrease the air volume, and the second control button 163b is used to increase the air volume. The water mist control button 164 is used to control the water mist to be turned on or off. When the water mist is turned off, the spraying fan 100 can be used as a normal fan, which only blows air. When the water mist is turned on, the spraying fan 100 can perform spraying and blowing actions at the same time. As an example, the water mist control button 164 further includes a water mist multi-gear adjustment button 164a, and the water mist multi-gear adjustment button 164a controls a output power or pressure of the water pump through a circuit, and then controls the water mist to be sprayed at different sizes or rates and display on the display screen, so as to meet the different needs of different application scenarios. The top-gear button 165 is used to control the fan to directly connect to the motor to reach a maximum power and output a maximum air volume. When the top-gear button 165 is pressed, the second indicator light 166 lights up or flashes and indicates that the misting fan has reached the maximum air volume. When the maximum air volume is reached by pressing the second control button 163b for many times, the second indicator light 166 also lights up or flashes accordingly. In other examples, the second indicator light 166 may also be used to display the power level of the battery assembly.

The present example further includes a control method of nozzles. The control module 16 can control the nozzles 113 to reduce the total amount of water output from the nozzles 113 for a period of time, while ensuring that a water output pressure from the nozzles 113 remains unchanged. That is, within a time T, when an outlet pressure of a single nozzle is P, a total amount of a water output from the nozzles is Q, and this process is recorded as a maximum water volume required under a given nozzle outlet pressure. Under an action of the control module, within the time T, when the outlet pressure of a single nozzle is P, the total amount of water output from the nozzles is Q', and this Q'<Q. Specifically, under the action of the control module, the water volume can be reduced to 10%~90% of the maximum water output Q, that is, 0.1Q≤Q'≤0.9Q. Further, the water volume can be reduced to 33% or 66% of the maximum water output Q, and the misting effect and cooling performance can also be guaranteed.

The above example for reducing water volume includes but is not limited to the following examples:
In an example, the control module 16 controls the nozzles 113 to have a time interval t between an n^{th} spraying of water mist and an n+1^{th} spraying of water mist, where n≥1. The control module realizes a pulsed water misting by controlling a start and stop of the water pump. An original outlet pressure is maintained when the n^{th} and n+1^{th} spraying of water mist, which can ensure the required atomization effect and reduce the required water volume at the same time. As a user, when using the misting fan, a continuous water spray will affect the user on the contrary, causing it to form accumulated water spots at a sprayed place. As the pulsed water spray has the required atomization effect, a continuous blowing is combined with an interval time, so that the moisture on the user's skin, a surface of the clothing and a surface of working piece evaporates, keeping the work dry. In this example, a rotation function of the fan assembly can be combined to make the water mist cover a wider range. Specifically, when the misting fan 100 is in a spray interval, the control module 16 can control the misting fan 100 to rotate at a certain angle, or, when the misting fan 100 is in the spray interval, the control module 16 can control the misting fan 100 to reduce the rotation speed. That is, the misting fan 100 swings fast during spraying and swings slow after spraying and so on.

In another example, the control module 16 controls a part of the nozzles 113 to spray water mist, and the remaining nozzles stop spraying water mist. At the same time, the control module 16 calculates and reduces a water supply by reducing a working power and so on of the pump, so that the outlet pressure of the nozzles maintains at a predetermined pressure, the predetermined pressure is greater than or equal to 60 PSI and less than or equal to 1000 PSI, and can be selected to be greater than or equal to 80 PSI and less than or equal to 600PSI. In this example, the water pipe assembly 114 connecting each nozzle 113 includes a plurality of individually controlled pipelines, or the water pipe assembly 114 is composed of a main water circuit and a plurality of branch circuits corresponding to each of the nozzles 113. The connection between the branch circuit and the main water circuit is provided with a valve controlled by the control module. The valve is used to control the opening and closing of each branch. Since in this example, the nozzles 113 are equally spaced on a circumference of the fan, when some of the nozzles are controlled to be open and some of the nozzles are controlled to close, the opened nozzles should be spaced and evenly distributed on the misting fan.

In another example, the control module 16 controls at least part of the nozzles 113 to reduce a diameter of a water outlet. Or the diameters of the nozzles 113 are reduced by the user's operation. The above-mentioned methods for reducing the diameter of the nozzles include, but are not limited to rotating nozzles and so on. Specifically, switching structures are provided within the nozzles, and the control module 16 or the user can change the diameters of the nozzles 113 through the switching structures. At the same time, the control module 16 calculates and reduces a water supply by reducing a working power and so on of the pump, so that the outlet pressure of the nozzles maintains at a predetermined pressure, the predetermined pressure is greater than or equal to 60 PSI and less than or equal to 1000 PSI, and can be selected to be greater than or equal to 80 PSI and less than or equal to 600PSI.

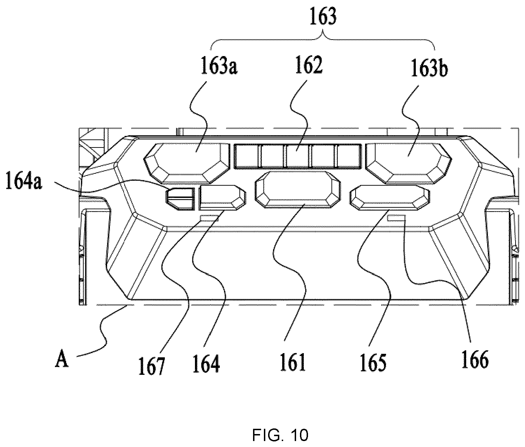

This example also includes a control method of a pump for protecting the operation of the pump. when the pump is working, when it is detected that a working current of the pump is greater than a maximum rated working current, the control module 16 determines that the pump is blocked, and the control module 16 controls the pump to stop working. When the pump is working, when it is detected that the working current of the pump is less than the minimum rated working current for a continuous time t₀, the control module 16 determines that the pump is dry-heated, and the control module 16 controls the pump to stop working. As shown in FIG. 10, the panel of the control module 16 further includes a second indicator light 167. The second indicator light is used to display whether the pump is in a fault state. When the pump is in a blocked or a dry-heated condition, the control module 16 controls the second indicator light 167 to flash to prompt the user.

When the misting fan 100 is set for a remote control through a power control, the misting fan 100 can be controlled and operated through other clients or platforms. As an example, the misting fan 100 can be controlled via a Bluetooth connection. It is to be understood that the misting fan 100 can also be controlled by other means, such as being controlled by communication control. In this example, when the misting fan 100 is controlled via the Bluetooth, it can control a wind speed of the misting fan 100, an amount of water sprayed, a startup and shutdown of the machine and a timed startup and shutdown of the machine, and can also control the switch of the indicator lights of the display screen.

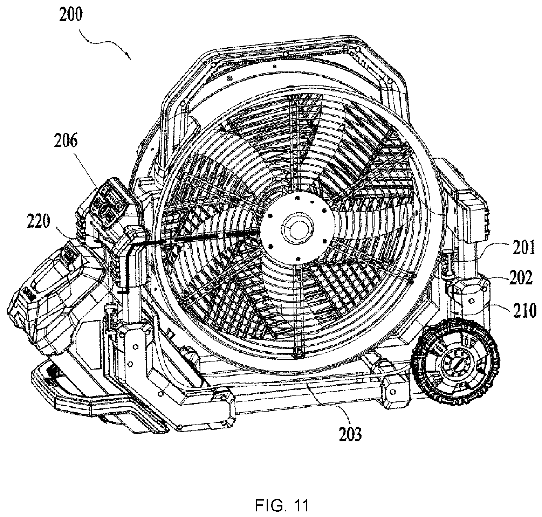

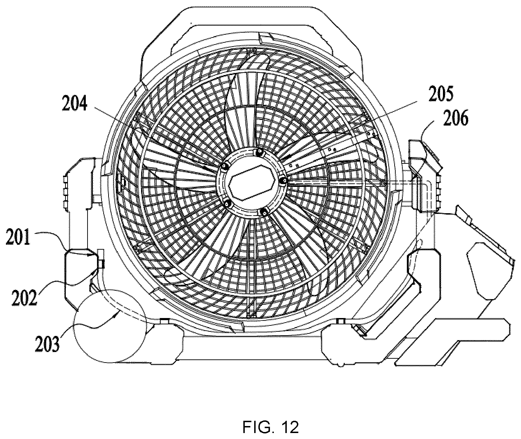

In a second example as shown in FIGS. 11 and 12, a misting fan 200 has a part of the structure that is different from the previous example, and only the difference from the misting fan 100 of a first example is described here. The same structure uses the same reference signs, and is not stated again.

The misting fan 200 includes a water inlet pipe 203, and the water inlet pipe 23 is connected to a pump. In this example, the pump is installed in the battery compartment 126, and the water inlet pipe 203 is led out from the battery compartment 126. Since both the battery pack and the pump are arranged in the battery compartment 126, in order to ensure the safety of the battery pack, a partition plate is provided in the battery compartment to divide an accommodating space into a plurality of mutually closed chambers.

The rack 12 is provided with a fixing portion 202 to fix and receive the water inlet pipe 203. Specifically, according to the length of the water inlet pipe 203, there may be a plurality of fixing portions 202, which are respectively provided on the first connecting assembly, the second connecting assembly and the third connecting assembly. Since an end of the water inlet pipe 203 is generally equipped with a filter device 201, in order to ensure the cleanness of the filter device 201, the fixing portion at an end of the water inlet pipe 203 is located away from a position of the battery compartment 126, and is specifically located in the middle and upper portion of the first connecting assembly 121. Thus, the water inlet pipe 203 starting from the third connecting assembly 123 extends along the second connecting assembly 122, and extends from bottom to top to the middle portion of the first connecting assembly 121. At this time, the lower end of the filter device 201 is fixed in the fixing portion 202 upwards, and the water inlet pipe is 203 is in a first storage state 210.

An upper end of the first connecting assembly 121 includes a housing surface parallel to a horizontal plane, or includes a groove, which can be used as a placement position of the water inlet pipe 203. At this time, the water inlet pipe 203 is in a second storage state, and this state can be used as a temporary placement position of the water inlet pipe 203, a fixing portion may be arranged as a storage fixing position.

As shown in FIGS. 11 and 12, the misting fan 200 further includes a water outlet pipe 206. The water outlet pipe 206 is led out from the battery compartment 126 and introduced into the fan assembly through the first connecting assembly 121 and the second pivot 128 in sequence. In this example, the nozzles are arranged in a center stand 204 of a cover. Since there are multiple nozzles, and they are distributed at equal distances along the center stand 204, an annular water diversion pipe 205 is arranged in the center stand 204, supplying the water source in the water outlet pipe 206 to the nozzles respectively.

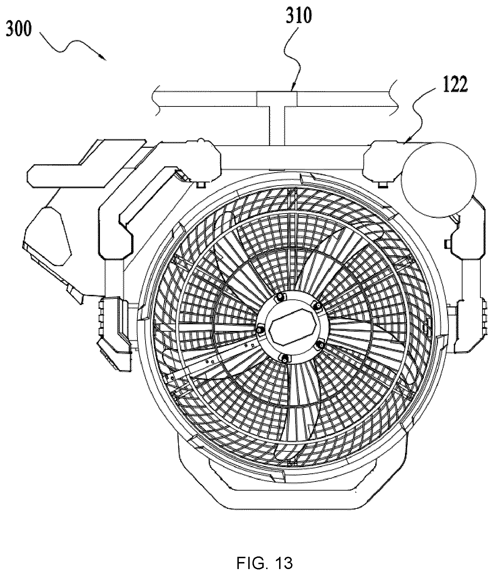

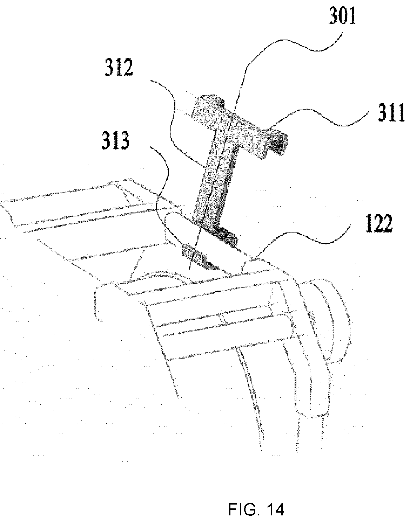

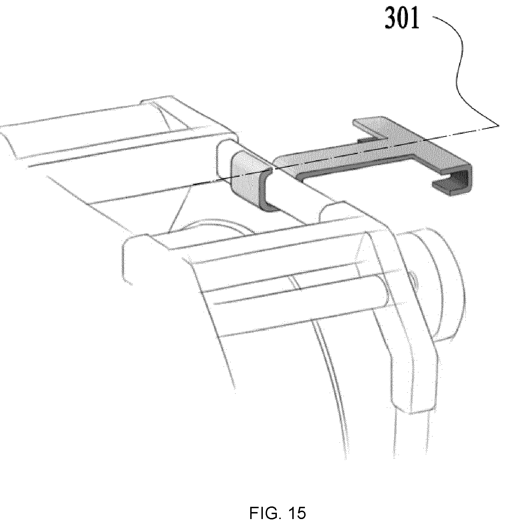

In a third example shown in FIGS. 13 to 15 , a misting fan 300 can also be provided with a hook 310 matched with the handle portion 111e or the rack 12, so that the misting fan 100 can be hang to a preset height or a preset position. In this example, for the sake of convenience, the same structures use the same reference signs as those in the first and second examples, and only the differences from the first and second examples are described here.

The hook 310 is detachably connected to the misting fan 300. The hook 310 includes a first hook 311, a second hook 313 and a connecting portion 312, and the connecting portion 312 connects the first hook 311 and the second hook 313. The first hook 311 is used for detachable connection with the second connecting assembly 122, or detachable connection with the handle portion 111e. The second hook 313 is used for detachable connection with a fixture in the external environment. The connecting portion 312 extends along a first direction 301, and the first direction 301 may be parallel to a setting plane of the fan assembly, may also be perpendicular to the setting plane, or may be at a certain angle to the setting plane, or the connecting portion 312 has a mechanism which can adjust the relative relationship between the first direction 301 and the setting plane, so as to adapt to different external environments. In other examples, the hook 310 may also be a flexible structure or other detachable structures in other forms, which is not limited herein.

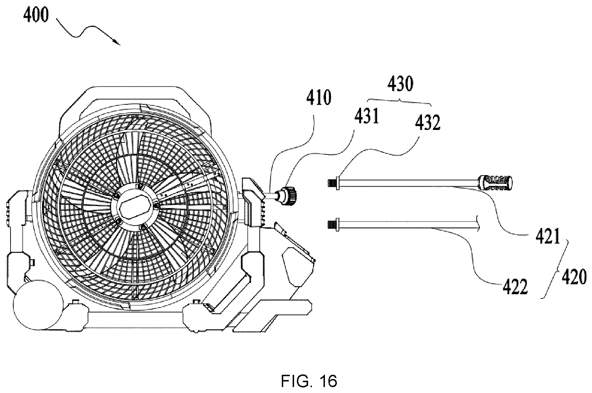

In a fourth example as shown in FIG. 16, a misting fan 400 has a part of the structure that is different from the previous example. Only the differences from the misting fan 100 of the first example are described here, and the same structure uses the same reference sings, and is not stated again.

The misting fan 400 includes a water inlet pipe 410, a first end of the water pipe 410 is connected to the nozzles 113 through a pipeline, and a second end extends outward from the misting fan 400 and is connected to a water source. The first end of the water inlet pipe 410 can be connected to a pump or an internal waterway system. The internal waterway system refers to the waterway system that connects the nozzles 113 inside the misting fan 400. When the pump is installed in the battery compartment 126, the water inlet pipe 410 may extend from the battery compartment 126, or be integrated inside the housing of the rack and extend from one side of the misting fan 400.

The misting fan 400 is further provided with a water distribution pipe 420 connected to the water inlet pipe 410, and the water distribution pipe 420 is detachably connected with the water inlet pipe 410. The water distribution pipe 420 includes at least a first water distribution pipe 421 and a second water distribution pipe 422. The first water distribution pipe 421 is used to connect to a first external water source, and the second water distribution pipe 422 is used to connect to a second external water source. The first external water source is a static water source, and the second external water source is a flowing water source. The static water source is to be understood as water contained in a reservoir, such as water in a bucket. The second external water source is specifically the flowing water source, and the flowing water source is to be understood as a water source having a certain flow rate, such as tap water.

A quick release mechanism 430 is provided at the connection between the water inlet pipe 410 and the water distribution pipe 420. The quick release device 430 includes a first connecting head 431 provided at an end of the water inlet pipe 410 and a second connecting head 432 disposed at an end of the water distribution pipe 420. The first connection head 431 and the second connection head 432 are configured to be detachably connected to each other. Specifically, they can be connected in the form of threaded caps and threads, or they can be connected by means of compression type, socket type, and so on, which is not limited herein.

The water distribution pipe 420 is provided with a connection head or a filter device, and the connection head is used to connect an external dynamic water source or to extend the pipeline. A structure for accommodating the water inlet pipe 410 or the water distribution pipe 420 is also arranged in the rack or the battery compartment.

The water inlet pipe 410 is provided with a pressure-stabilizing valve, which is used to reduce the water hammer phenomenon, and can be optionally arranged on the upstream of the pump. There is generally a one-way valve for the water to flow in and out of the pump respectively. When the pump encounters the water hammer phenomenon, the instantaneous pressure is about tens of kilograms. The one-way valve of the pump is generally made of plastic. Under the impact of this moment, it may cause deformation, breakage and fall off, etc., which affects the supply of water flow to the misting fan. The pressure-stabilizing valve can reduce the damage to the pump structure caused by the water hammer effect, improve the stability of the misting fan, and prolong the service life.

## Claims

1. A misting fan (100, 200, 300, 400), comprising:
a host (11) comprising a fan assembly (112) and a nozzle (113), wherein the fan assembly comprises a fan blade (112a) and a motor (112b) configured to drive the fan blade, and the nozzle is located on the fan assembly and configured to spray water mist; and
a rack (12) configured to support the fan assembly;
wherein the rack comprises an extending portion configured to be placed and extending in a plane parallel to a placement plane (101) of the external environment; and
the misting fan is provided with a moving wheel (14) for walking, wherein the moving wheel is provided in the extending portion and a battery compartment (126) configured to accommodate a power supply assembly (13) to power the motor, wherein the battery compartment is arranged at an end of the rack away from the moving wheel;
wherein an extending direction of the battery compartment and the extending portion obliquely intersect and form a included angle (α), **characterized in that** the included angle is greater than or equal to 10° and less than or equal to 75°.

2. The misting fan according to claim 1, further comprising a handle assembly (15) cooperated with the moving wheel, wherein the handle assembly is provided on an end away of the extending portion from the moving wheel.

3. The misting fan according to claim 2, wherein the handle assembly is set as a telescopic structure and has a first state and a second state relative to the rack, the handle assembly is in a contracted state when the handle assembly is in the first state relative to the rack, and the handle assembly is in an extended state when the handle assembly is in the second state relative to the rack.

4. The misting fan according to claim 3, wherein when the handle assembly is in the second state, the misting fan walks at a relative angle to a walking road and the moving wheel serves as a pivot at this time.

5. The misting fan according to claim 1, wherein the rack comprises a first connecting assembly (121), a second connecting assembly (122) and a third connecting assembly (123), the second connecting assembly is connected to the first connecting assembly and the third connecting assembly respectively, a first buffer portion (124) is provided at the connection of the first connecting assembly and the second connecting assembly, the first buffer portion obliquely intersects with the first connecting assembly and the second connecting assembly, a second buffer portion (125) is provided at the connection of the third connecting assembly and the second connecting assembly, and the second buffer portion obliquely intersects with the third connecting assembly and the second connecting assembly.

6. The misting fan according to claim 1, further comprising a handle assembly configured to be held by a user, wherein the handle assembly comprises a grip portion (152) arranged around the battery compartment.

7. The misting fan according to claim 1, further comprising a handle assembly configured to be held by a user, wherein the handle assembly comprises a grip portion (152), and the grip portion and the battery compartment are arranged on the same side of the fan assembly.

8. The misting fan according to claim 1, further comprising a handle assembly configured to be held by a user and a panel of a control module (16), wherein the handle assembly comprises a grip portion (152), and the grip portion and the panel are arranged on the same side of the fan assembly.

9. The misting fan according to claim 1, wherein a size of the host in a left-right direction is greater than or equal to 400 mm and less than or equal to 500 mm.

10. The misting fan according to claim 1, wherein an air volume is blown out by the misting fan reaches 5000 cfm.

11. The misting fan according to claim 1, wherein the misting fan at least comprises a first standing posture and a second standing posture.

12. The misting fan according to claim 11, wherein different positions of the rack are in contact with a placement plane (101) when the misting fan is in different standing postures.

## Patentansprüche

1. Sprühventilator (100, 200, 300, 400), umfassend:
ein Grundgerät (11), das eine Ventilatoreinheit (112) und eine Düse (113) umfasst, wobei die Ventilatoreinheit ein Lüfterblatt (112a) und einen Motor (112b) umfasst, der dazu eingerichtet ist, das Lüfterblatt anzutreiben, und wobei die Düse an der Ventilatoreinheit angeordnet ist und dazu eingerichtet ist, Wassernebel zu versprühen; und
ein Gestell (12), das dazu eingerichtet ist, die Ventilatoreinheit zu tragen;
wobei das Gestell einen Auslegerabschnitt umfasst, der dazu eingerichtet ist, auf einer Ebene platziert zu werden und sich in einer zur Aufstellfläche (101) der äußeren Umgebung parallelen Ebene erstreckt; und
der Sprühventilator ist mit einem Laufrad (14) zum Bewegen versehen, wobei das Laufrad im Auslegerabschnitt vorgesehen ist, und mit einem Batteriefach (126), das dazu eingerichtet ist, eine Stromversorgungsanordnung (13) aufzunehmen, um den Motor mit Strom zu versorgen, wobei das Batteriefach an einem dem Laufrad abgewandten Ende des Gestells angeordnet ist;
wobei eine Erstreckungsrichtung des Batteriefachs und des Auslegerabschnitts sich schräg schneiden und einen Schnittwinkel (α) bilden, **dadurch gekennzeichnet, dass** der Schnittwinkel größer oder gleich 10° und kleiner oder gleich 75° ist.

2. Sprühventilator nach Anspruch 1, ferner umfassend eine Griffeinheit (15), die mit dem Laufrad zusammenwirkt, wobei die Griffeinheit an einem dem Laufrad abgewandten Ende des Auslegerabschnitts vorgesehen ist.

3. Sprühventilator nach Anspruch 2, wobei die Griffeinheit als teleskopierbare Struktur ausgestaltet ist und zu dem Gestell einen ersten Zustand und einen zweiten Zustand aufweist, wobei sich die Griffeinheit im ersten Zustand zu dem Gestell in einem eingefahrenen Zustand befindet und sich im zweiten Zustand zu dem Gestell in einem ausgefahrenen Zustand befindet.

4. Sprühventilator nach Anspruch 3, wobei sich der Sprühventilator im zweiten Zustand der Griffeinheit unter einem relativen Winkel zu einer Gehfläche bewegt und das Laufrad dabei als Drehpunkt dient.

5. Sprühventilator nach Anspruch 1, wobei das Gestell eine erste Verbindungseinheit (121), eine zweite Verbindungseinheit (122) und eine dritte Verbindungseinheit (123) umfasst, wobei die zweite Verbindungseinheit jeweils mit der ersten und dritten Verbindungseinheit verbunden ist, wobei ein erster Dämpfungsabschnitt (124) an der Verbindung zwischen der ersten Verbindungseinheit und der zweiten Verbindungseinheit vorgesehen ist, wobei der erste Dämpfungsabschnitt die erste Verbindungseinheit und die zweite Verbindungseinheit schräg schneidet, wobei ein zweiter Dämpfungsabschnitt (125) an der Verbindung zwischen der dritten Verbindungseinheit und der zweiten Verbindungseinheit vorgesehen ist, und wobei der zweite Dämpfungsabschnitt die dritte Verbindungseinheit und die zweite Verbindungseinheit schräg schneidet.

6. Sprühventilator nach Anspruch 1, ferner umfassend eine Griffeinheit, die dazu eingerichtet ist, von einem Benutzer gehalten zu werden, wobei die Griffeinheit einen Griffabschnitt (152) umfasst, der um das Batteriefach herum angeordnet ist.

7. Sprühventilator nach Anspruch 1, ferner umfassend eine Griffeinheit, die dazu eingerichtet ist, von einem Benutzer gehalten zu werden, wobei die Griffeinheit einen Griffabschnitt (152) umfasst, und wobei der Griffabschnitt und das Batteriefach an derselben Seite der Ventilatoreinheit angeordnet sind.

8. Sprühventilator nach Anspruch 1, ferner umfassend eine Griffeinheit, die dazu eingerichtet ist, von einem Benutzer gehalten zu werden, und ein Bedienfeld eines Steuerungsmoduls (16), wobei die Griffeinheit einen Griffabschnitt (152) umfasst, und wobei der Griffabschnitt und das Bedienfeld an derselben Seite der Ventilatoreinheit angeordnet sind.

9. Sprühventilator nach Anspruch 1, wobei eine Größe des Grundgeräts in Links-Rechts-Richtung größer oder gleich 400 mm und kleiner oder gleich 500 mm ist.

10. Sprühventilator nach Anspruch 1, wobei ein vom Sprühventilator ausgeblasenes Luftvolumen 5000 cfm erreicht.

11. Sprühventilator nach Anspruch 1, wobei der Sprühventilator zumindest eine erste Standhaltung und eine zweite Standhaltung umfasst.

12. Sprühventilator nach Anspruch 11, wobei sich bei unterschiedlichen Standhaltungen des Sprühventilators unterschiedliche Positionen des Gestells mit einer Aufstellfläche (101) in Kontakt befinden.

## Revendications

1. Un ventilateur brumisateur (100, 200, 300, 400), comprenant :
un corps principal (11) comprenant un ensemble ventilateur (112) et une buse (113), dans lequel l'ensemble ventilateur comprend une pale de ventilateur (112a) et un moteur (112b) configuré pour entraîner la pale de ventilateur, et la buse est située sur l'ensemble ventilateur et configurée pour pulvériser de la brume d'eau ; et
un support (12) configuré pour supporter l'ensemble ventilateur ;
dans lequel le support comprend une portion d'extension configurée pour être posée et s'étendre dans un plan parallèle à un plan de pose (101) de l'environnement extérieur ; et
le ventilateur brumisateur est pourvu d'une roue mobile (14) pour le déplacement, la roue mobile étant disposée dans la portion d'extension, et un compartiment à batterie (126) configuré pour loger un ensemble d'alimentation électrique (13) destiné à alimenter le moteur, le compartiment à batterie étant agencé à une extrémité du support opposée à la roue mobile ;
dans lequel une direction d'extension du compartiment à batterie et de la portion d'extension se croisent obliquement et forment un angle d'intersection (α), **caractérisé en ce que** l'angle d'intersection est supérieur ou égal à 10° et inférieur ou égal à 75°.

2. Le ventilateur brumisateur selon la revendication 1, comprenant en outre un ensemble poignée (15) coopérant avec la roue mobile, dans lequel l'ensemble poignée est disposé à une extrémité de la portion d'extension opposée à la roue mobile.

3. Le ventilateur brumisateur selon la revendication 2, dans lequel l'ensemble poignée est configuré comme une structure télescopique et possède un premier état et un second état par rapport au support, l'ensemble poignée étant dans un état rétracté lorsqu' il est dans le premier état par rapport au support, et l'ensemble poignée étant dans un état étendu lorsqu'il est dans le second état par rapport au support.

4. Le ventilateur brumisateur selon la revendication 3, dans lequel, lorsque l'ensemble poignée est dans le second état, le ventilateur brumisateur se déplace avec un angle relatif par rapport à un chemin de déplacement et la roue mobile agit alors comme pivot.

5. Le ventilateur brumisateur selon la revendication 1, dans lequel le support comprend un premier ensemble de liaison (121), un second ensemble de liaison (122) et un troisième ensemble de liaison (123), le second ensemble de liaison étant respectivement connecté au premier ensemble de liaison et au troisième ensemble de liaison, une première partie tampon (124) étant disposée à la jonction du premier ensemble de liaison et du second ensemble de liaison, la première partie tampon croisant obliquement le premier et le second ensemble de liaison, une seconde partie tampon (125) étant disposée à la jonction du troisième ensemble de liaison et du second ensemble de liaison, la seconde partie tampon croisant obliquement le troisième et le second ensemble de liaison.

6. Le ventilateur brumisateur selon la revendication 1, comprenant en outre un ensemble poignée configuré pour être tenu par un utilisateur, dans lequel l'ensemble poignée comprend une portion de préhension (152) agencée autour du compartiment à batterie.

7. Le ventilateur brumisateur selon la revendication 1, comprenant en outre un ensemble poignée configuré pour être tenu par un utilisateur, dans lequel l'ensemble poignée comprend une portion de préhension (152), et la portion de préhension et le compartiment à batterie sont disposés du même côté que l'ensemble ventilateur.

8. Le ventilateur brumisateur selon la revendication 1, comprenant en outre un ensemble poignée configuré pour être tenu par un utilisateur et un panneau d'un module de commande (16), dans lequel l'ensemble poignée comprend une portion de préhension (152), et la portion de préhension et le panneau sont disposés du même côté que l'ensemble ventilateur.

9. Le ventilateur brumisateur selon la revendication 1, dans lequel une taille du corps principal dans une direction gauche-droite est supérieure ou égale à 400 mm et inférieure ou égale à 500 mm.

10. Le ventilateur brumisateur selon la revendication 1, dans lequel un volume d'air soufflé par le ventilateur brumisateur atteint 5000 cfm.

11. Le ventilateur brumisateur selon la revendication 1, dans lequel le ventilateur brumisateur comprend au moins une première position debout et une seconde position debout.

12. Le ventilateur brumisateur selon la revendication 11, dans lequel différentes positions du support sont en contact avec un plan de pose (101) lorsque le ventilateur brumisateur est dans différentes positions debout.
